# EUROPEAN PATENT APPLICATION

(11) **EP 4 521 171 A1**
(43) Date of publication of application: **12.03.2025**
(21) Application number: 24194508.8
(22) Date of filing: 14.08.2024
(51) Int. Cl.: G03G 15/36, G03G 15/00

(54) **IMAGE FORMING APPARATUS, IMAGE FORMING SYSTEM, IMAGE FORMING METHOD, AND CARRIER MEDIUM**

(30) Priority: 05.09.2023 JP 2023143966
(71) Applicant: Ricoh Company, Ltd., Tokyo 143-8555 (JP)
(72) Inventor: KINOSHITA, Hidenori, Tokyo 105-8503 (JP)
(74) Representative: SSM Sandmair

(57) **Abstract**

An image forming apparatus (100) includes an image forming device (30), a first conveyance mechanism (20), a second conveyance mechanism (50), and a control unit (210). The image forming device (30) forms an image on a recording medium. The first conveyance mechanism (20) conveys the recording medium to the image forming device (30). The second conveyance mechanism (50) conveys the recording medium having passed through the image forming device (30) to the image forming device (30) again. The control unit (210) controls multiple times of printing operations of the image forming device (30). The image forming device (30) performs multiple times of printing on a same side of the recording medium. The multiple times of printing include first printing and second printing. The first printing is printing on the recording medium based on first print data. The second printing is printing on the recording medium subjected to the first printing based on second print data different from the first print data.

## Description

### BACKGROUND

### Technical Field

The present disclosure relates to an image forming apparatus, an image forming system, an image forming method, and a carrier medium.

### Related Art

Some known image forming apparatuses include an image forming device to form an image on a sheet, an image forming passage to convey a sheet to the image forming device, and a reverse passage to reverse the sheet and cause the reversed sheet to enter the image forming passage (for example, see Japanese Patent No. 6981066). The reverse passage includes a switchback portion that causes the sheet to travel in the reverse direction. The image forming apparatus described in Japanese Patent No. 6981066 further includes a shortcut passage to cause the sheet to return to the image forming passage without passing through the switchback portion. With this configuration, the image forming apparatus can convey the sheet to the image forming device such that images are formed on the same side of the sheet.

Japanese Patent No. 6981066 does not teach or suggest how to form images on the same side of the sheet. In Japanese Patent No. 6981066, there is room for improvement in the color quality of images formed on a medium.

### SUMMARY

According to an embodiment of the present invention, an image forming apparatus includes an image forming device, a first conveyance mechanism, a second conveyance mechanism, and a control unit. The image forming device forms an image on a recording medium. The first conveyance mechanism conveys the recording medium to the image forming device. The second conveyance mechanism conveys the recording medium having passed through the image forming device to the image forming device again. The control unit controls multiple times of printing operations of the image forming device. The image forming device performs multiple times of printing on a same side of the recording medium. The multiple times of printing include first printing and second printing. The first printing is printing on the recording medium based on first print data. The second printing is printing on the recording medium subjected to the first printing based on second print data different from the first print data.

According to an embodiment of the present invention, an image forming system for printing multiple times on a same side of a recording medium with an image forming device includes a first conveyance mechanism, a second conveyance mechanism, and a control unit. The first conveyance mechanism conveys the recording medium to the image forming device. The second conveyance mechanism conveys the recording medium having passed through the image forming device to the image forming device again. The control unit controls multiple times of printing operations of the image forming device. The control unit controls operations of the first conveyance mechanism, the second conveyance mechanism, and the image forming device to cause the image forming device to perform first printing on the recording medium based on first print data and perform second printing on the recording medium subjected to the first printing based on second print data different from the first print data.

According to an embodiment of the present invention, an image forming method for printing multiple times on a same side of a recording medium with an image forming device includes first conveying the recording medium to the image forming device, second conveying the recording medium having passed through the image forming device to the image forming device again, and controlling multiple times of printing operations of the image forming device. The controlling includes causing the image forming device to perform first printing on the recording medium based on first print data and perform second printing on the recording medium subjected to the first printing based on second print data different from the first print data.

According to an embodiment of the present invention, a carrier medium carries computer-readable code for controlling a computer system to carry out a method for printing multiple times on a same side of a recording medium with an image forming device. The method includes first conveying the recording medium to the image forming device, second conveying the recording medium having passed through the image forming device to the image forming device again, and controlling multiple times of printing operations of the image forming device. The controlling includes causing the image forming device to perform first printing on the recording medium based on first print data and perform second printing on the recording medium subjected to the first printing based on second print data different from the first print data.

Accordingly, an image forming apparatus is provided that enhances the color quality of an image.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic diagram illustrating a configuration of an image forming apparatus according to an embodiment of the present disclosure;
FIGS. 2A and 2B are plan views of example front and back sides of a recording medium;
FIG. 3 is a block diagram illustrating a hardware configuration of an image forming apparatus according to an embodiment of the present disclosure;
FIG. 4 is a functional block diagram of an image forming apparatus according to an embodiment of the present disclosure;
FIG. 5 is an example of a setting table related to data for printing multiple times on the same side of a recording medium;
FIGS. 6A to 6D are diagrams illustrating an example (Case 1) of data for printing multiple times on the same side of a recording medium;
FIGS. 7A to 7C are diagrams illustrating an example (Case 2) of data for printing multiple times on the same side of a recording medium;
FIGS. 8A to 8C are diagrams illustrating an example (Case 3) of data for printing multiple times on the same side of a recording medium;
FIGS. 9A to 9C are diagrams illustrating an example (Case 4) of data for printing multiple times on the same side of a recording medium;
FIGS. 10A to 10E are diagrams an example (Case 5) of data for printing multiple times on the same side of a recording medium;
FIG. 11 is a flowchart illustrating a control process performed by an image forming apparatus according to an embodiment of the present disclosure; and
FIG. 12 is a diagram of an example of an operation screen for setting the multiple times of printing on the same side of a recording medium.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below.

As used herein, the singular forms "a," "an," and "the" are intended to include the plural forms as well, unless the context clearly indicates otherwise. The term "connected/coupled" includes both direct connections and connections in which there are one or more intermediate connecting elements.

In the specification and drawings, substantially the same components are denoted by the same reference numerals, and redundant description thereof may be omitted.

In the following description, image formation, print, printing, and recording are all synonymous.

A description is given below of an image forming apparatus 100 according to an embodiment of the present disclosure.

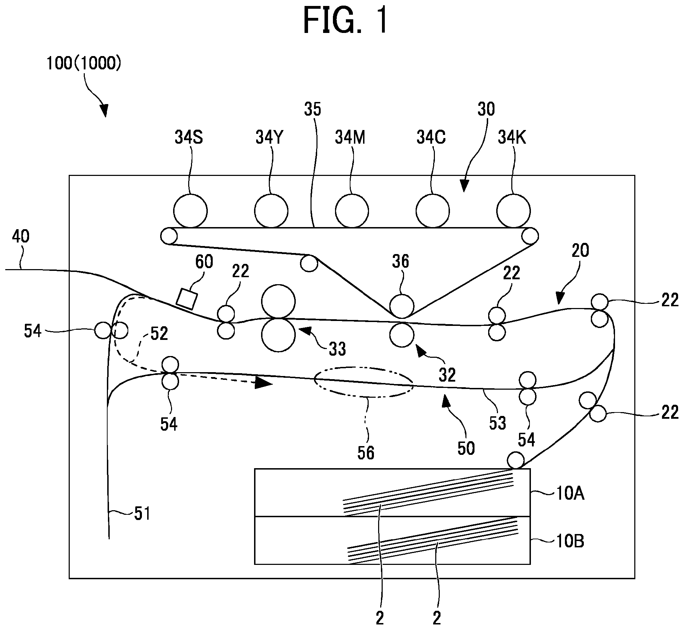

FIG. 1 is a schematic diagram illustrating a configuration of the image forming apparatus 100 according to an embodiment of the present disclosure.

In the example illustrated in FIG. 1, the image forming apparatus 100 is an electrophotographic tandem-type color image forming apparatus. The image forming apparatus 100 includes sheet feeding devices 10A and 10B, a first conveyance mechanism 20, an image forming device 30, a fixing device 33, a sheet ejection device 40, and a second conveyance mechanism 50.

The image forming device 30 includes an intermediate transfer belt 35, multiple drum-shaped photoconductors 34K, 34C, 34M, 34Y, and 34S facing the intermediate transfer belt 35, and a transfer unit 32. In the image forming apparatus 100, the image forming device 30 forms a full-color image on a recording medium supplied from the sheet feeding device 10A or 10B and the first conveyance mechanism 20, the first conveyance mechanism 20 conveys the recording medium bearing the full-color image and ejects the recording medium to the sheet ejection device 40.

### Recording Medium 2

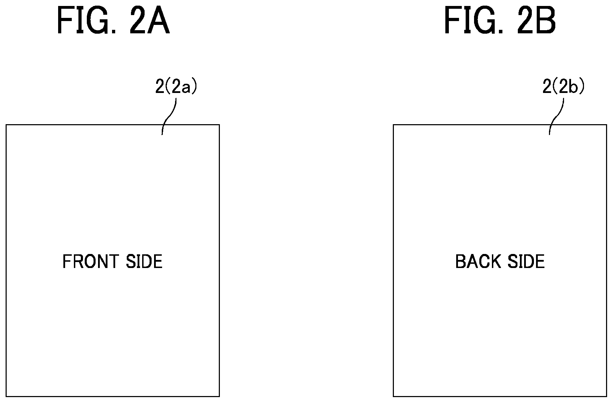

FIGS. 2A and 2B are plan views of example front and back sides of a recording medium 2.

Specifically, FIG. 2A is a plan view of a front side 2a of the recording medium 2. FIG. 2B is a plan view of a back side 2b of the recording medium 2.

The recording medium 2 is a sheet-shaped recording medium 2 having a predetermined thickness. The back side 2b is an opposite side of the front side 2a in the thickness direction of the recording medium 2. The front side 2a is an example of a first side of the recording medium. The back side 2b may be a second side of the recording medium.

The recording medium 2 may be, for example, a sheet or a transparent film. The sheet may be, for example, a white sheet or a black sheet. The color of the sheet may be another color such as yellow, pink, or blue. The recording medium 2 may be a medium other than the sheet and the transparent film.

### Sheet Feeding Devices 10A and 10B

As illustrated in FIG. 1, the sheet feeding devices 10A and 10B are trays that hold the recording media 2. The sheet feeding devices 10A and 10B hold different types of recording media 2 from each other. The different types of recording media 2 include different materials or different colors. The sheet feeding device 10A holds the recording media 2 such as white sheets. The sheet feeding device 10B holds the recording media 2 such as black sheets. The image forming apparatus 100 may include sheet feeding devices that hold three or more types of recording media 2 or may include a sheet feeding device that holds one type of recording media 2.

### First Conveyance Mechanism 20

The first conveyance mechanism 20 is a conveyance mechanism that supplies the recording media 2 held in the sheet feeding devices 10A and 10B to the transfer unit 32. The first conveyance mechanism 20 includes a conveyance mechanism that conveys the recording medium 2 having passed the transfer unit 32 of the image forming device 30. The recording medium 2 having passed the transfer unit 32 is sent to the sheet ejection device 40 or the second conveyance mechanism 50 in a subsequent stage. The first conveyance mechanism 20 includes conveyance roller pairs 22 that convey the recording medium 2. The first conveyance mechanism 20 includes a guide that guides the conveyance of the recording medium 2.

### Image Forming Device 30

The image forming device 30 includes the transfer unit 32. The transfer unit 32 includes the drum-shaped photoconductors 34K, 34C, 34M, 34Y, and 34S, the intermediate transfer belt 35, and a secondary transfer roller 36. The intermediate transfer belt 35 is an endless belt on which an intermediate transfer image is formed. The intermediate transfer belt 35 rotates. The drum-shaped photoconductors 34K, 34C, 34M, 34Y, and 34S are arranged in this order in a direction in which the intermediate transfer belt 35 rotates.

The drum-shaped photoconductor 34K transfers a black toner onto the intermediate transfer belt 35 to form a black toner image on the surface of intermediate transfer belt 35. The drum-shaped photoconductor 34C transfers a cyan toner onto the intermediate transfer belt 35 to form a cyan toner image on the surface of the intermediate transfer belt 35. The drum-shaped photoconductor 34M transfers a magenta toner onto the intermediate transfer belt 35 to form a magenta toner image on the surface of the intermediate transfer belt 35. The drum-shaped photoconductor 34Y transfers a yellow toner onto the intermediate transfer belt 35 to form a yellow toner image on the surface of the intermediate transfer belt 35.

The drum-shaped photoconductor 34S transfers a special toner onto the intermediate transfer belt 35 to form a special toner image on the surface of the intermediate transfer belt 35. Examples of the special toner include white, gold, silver, fluorescent, fluorescent coloring, clear, and intermediate color toners.

The secondary transfer roller 36 transfers the toner image formed on the intermediate transfer belt 35 to the front side 2a or the back side 2b of the recording medium 2.

The fixing device 33 includes a fixing roller and a heater. The fixing device 33 fixes the toner image that has been transferred to the recording medium 2 to the front side 2a or the back side 2b of the recording medium 2. Thus, an image is formed on the front side 2a or the back side 2b of the recording medium 2. The fixing device 33 fixes the toner image to the recording medium 2 by heating and pressing the recording medium 2 to which the toner image has been transferred. The heater may be, for example, a halogen heater. The heater is built in the fixing roller.

### Sheet Ejection Device 40

The sheet ejection device 40 includes an output tray to which the recording medium 2 subjected to printing is ejected. The recording medium 2 on which printing is completed is ejected to the sheet ejection device 40.

### Second Conveyance Mechanism 50

The second conveyance mechanism 50 is a conveyance mechanism that supplies the recording medium 2 having passed through the image forming device 30 to the image forming device 30 again. The second conveyance mechanism 50 includes a conveyance passage to return the recording medium 2 that is not ejected to the image forming device 30 again. The second conveyance mechanism 50 includes a switchback portion 51, a shortcut portion 52, and a return portion 53. The switchback portion 51 reverses the direction of conveyance of the recording medium 2 to convey the recording medium 2 backward. The reversed recording medium 2 passes through the return portion 53 and is supplied to the transfer unit 32 through the first conveyance mechanism 20. For example, to form an image on the back side 2b after forming another image on the front side 2a, the recording medium 2 is introduced into the switchback portion 51 where the direction of conveyance of the recording medium 2 is reversed and is supplied to the transfer unit 32 through the return portion 53.

The shortcut portion 52 supplies the recording medium 2 to the return portion 53 without routing the recording medium 2 through the switchback portion 51. The recording medium 2 having passed through the shortcut portion 52 passes through the return portion 53 without reversing the direction of conveyance and is supplied to the fixing device 33 through the first conveyance mechanism 20. For example, to form an image on the front side 2a and form another image on the front side 2a again, the recording medium 2 is supplied to the transfer unit 32 through the shortcut portion 52. The second conveyance mechanism 50 includes multiple conveyance roller pairs 54 to convey the recording medium 2.

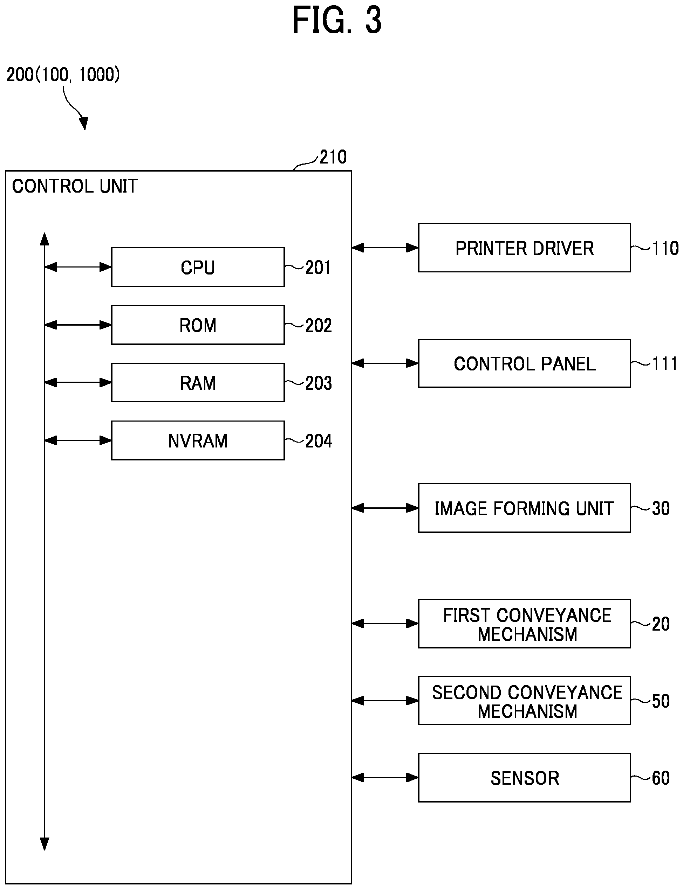

Referring to FIG. 3, a description is given below of a hardware configuration of the image forming apparatus 100.

FIG. 3 is a block diagram illustrating the hardware configuration of the image forming apparatus 100 according to an embodiment of the present disclosure.

The image forming apparatus 100 includes a controller 200 that includes a control unit 210.

A printer driver 110 is connected to the control unit 210. The printer driver 110 generates print data. The printer driver 110 may generate print data in an information processing terminal such as a personal computer (PC), an image reading apparatus such as an image scanner, or a host apparatus such as an imaging apparatus such as a digital camera. The printer driver 110 generates dot pattern data for the image forming apparatus 100 to output an image.

### Control Unit 210

A control unit 210 includes a central processing unit (CPU) 201, a read-only memory (ROM) 202, a random-access memory (RAM) 203, and a non-volatile random-access memory (NVRAM) 204.

The CPU 201 is a calculation unit and controls the operation of the entire image forming apparatus 100. The CPU 201 performs control related to an operation to convey the recording medium 2 and a printing operation of the image forming device 30. The ROM 202 is a read-only non-volatile storage medium. The ROM 202 stores programs such as firmware. The RAM 203 is a volatile storage medium capable of reading and writing information at high speed. The RAM 203 is used as a work area for the CPU 201 to process information.

The NVRAM 204 is a non-volatile storage medium capable of reading and writing information. The NVRAM 204 stores, for example, an operating system (OS), various control programs, and application programs.

The CPU 201 reads a program from a storage device and loads the program into the RAM 203. The CPU 201 executes calculations according to the program loaded into the RAM 203. Thus, a software control unit is configured. The storage device includes the ROM 202 and the NVRAM 204. The storage device may include a storage medium such as an optical disk.

The software control unit cooperates with hardware to implement functions, illustrated as functional blocks, of the image forming apparatus 100. The CPU 201 and the RAM 203 function as the various control units as illustrated in FIG. 3. The various control units will be described later.

### Control Panel 111

The image forming apparatus 100 includes a control panel 111. The control panel 111 is connected to the control unit 210. The control panel 111 is an input unit operable by a user to input instructions. The control panel 111 may be, for example, a liquid crystal panel. The user can change printing settings by operating the control panel 111. The user can also change various settings by operating the control panel 111.

The user can input information on the recording medium 2 by operating the control panel 111. The user can input, for example, whether the recording medium 2 is a white sheet by operating the control panel 111. Information input through the control panel 111 is transmitted to the control unit 210. The control panel 111 may be a display and an input unit of a terminal (PC) connected to the control unit 210.

### Sensor 60

The image forming apparatus 100 includes a sensor 60. The sensor 60 is a sensor that detects the color and density of an image formed on the recording medium 2. The sensor 60 may be disposed, for example, downstream from the fixing device 33 in direction of conveyance of the recording medium 2 in the conveyance passage through which the recording medium 2 is conveyed. The sensor 60 may be disposed in the conveyance passage defined by the first conveyance mechanism 20 or in the conveyance passage defined by the second conveyance mechanism 50. The sensor 60 may be a camera that images the printed side of the recording medium 2. The printed side is a surface on which an image is formed.

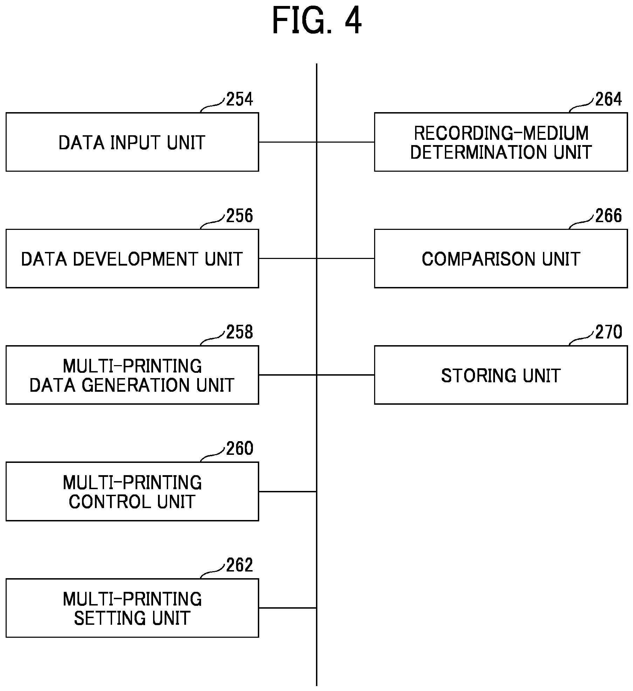

Referring to FIG. 4, a description is given below of a functional configuration of the control unit 210.

FIG. 4 is a functional block diagram of the control unit 210 according to a first embodiment.

The CPU 201 illustrated in FIG. 3 executes a program stored in the storage device such as the ROM 202 to implement the functions of a data input unit 254, a data development unit 256, a multi-printing data generation unit 258, a multi-printing control unit 260, a multi-printing setting unit 262, a recording-medium determination unit 264, a comparison unit 266, and a storing unit 270 illustrated in FIG. 4. The external device and the sensor connected to the control unit 210 may implement a part of these functions.

### Data Input Unit 254

The data input unit 254 receives various data. For example, the data input unit 254 receives print data from a client PC. The data input unit 254 can receive medium information.

The medium information is information on the recording medium 2 and includes information on the material and color of the recording medium 2. Examples of the material of the recording medium 2 include paper and film. Examples of the information on the color of the recording medium 2 include white, black, and transparent.

### Data Development Unit 256

For example, the data development unit 256 converts print data in a file format into a page description language (PDL) data, similarly to the printer driver. In the PDL, for example, the position, size, color, and font of each character are designated and the position of an image in the print area of the recording medium 2 is designated.

### Multi-Printing Data Generation Unit 258

The multi-printing data generation unit 258 generates data for printing multiple times on the same side of the recording medium 2. The multi-printing data generation unit 258 generates the data for printing multiple times based on the medium information. A detailed description thereof is deferred.

### Multi-Printing Control Unit 260

The multi-printing control unit 260 controls a printing operation and a medium conveying operation to print multiple times on the same side of the recording medium 2. The printing operation is a printing operation of the printing mechanism. In other words, the printing operation is a printing operation of the image forming device 30. The medium conveying operation is a conveying operation to convey the recording medium 2 to the image forming device 30. The medium conveying operation includes a medium conveying operation to return the recording medium 2 to perform the second and subsequent printing after the first printing. The medium conveying operation includes operations of the first conveyance mechanism 20 and the second conveyance mechanism 50. A detailed description thereof is deferred.

### Multi-Printing Setting Unit 262

The multi-printing setting unit 262 sets multiple times of printing on the same side based on, for example, the medium information and the print data. The multi-printing setting unit 262 may set the multiple times of printing on the same side based on, for example, information input by the user. The multi-printing setting unit 262 can set whether to print multiple times on the same side and the number of times of printing on the same side. A detailed description thereof is deferred.

### Recording-Medium Determination Unit 264

The recording-medium determination unit 264 determines the material and color of the recording medium 2. The recording-medium determination unit 264 may determine the material and color of the recording medium 2 based on the information input by the user through the control panel 111, for example. The recording-medium determination unit 264 may determine the material and color of the recording medium 2 based on an input tray of the sheet feeding device 10A or 10B selected by the user.

### Comparison Unit 266

The comparison unit 266 compares, with the print data, the color and density of an image as a print result, which is a result of printing based on the print data. The sensor 60 can detect the color and density of the image as the print result, which is the result of printing on the recording medium 2 as described above. The comparison unit 266 compares, with the print data, the color and density of the image as the print result detected by the sensor 60. The comparison unit 266 may compare, for example, the color and density of the image as the print result with a determination threshold based on the print data. The determination threshold is stored in advance in the storing unit 270, for example.

The multi-printing setting unit 262 may change the number of times of printing based on the result of the comparison performed by the comparison unit 266. The multi-printing setting unit 262 can increase the number of times of printing when the color and density of the image as the print result is less than the determination threshold. The multi-printing setting unit 262 can increase the number of times of printing to bring the print result closer to the print data. The multi-printing setting unit 262 can reduce the number of times of printing when the color and density of the image as the print result is equal to or greater than the determination threshold.

The multi-printing data generation unit 258 may change the data for printing based on the result of the comparison performed by the comparison unit 266. The multi-printing data generation unit 258 may change the data for the next printing to bring the print result closer to the initial print data when the color and density of the image as the print result is less than the determination threshold. When the image forming apparatus 100 prints multiple times, the multi-printing data generation unit 258 changes the data for the second printing after the first printing. The multi-printing data generation unit 258 can change the data for the second and subsequent printing to change, for example, the color area, the color expression, and the color quality. The color area includes, for example, color and density.

### Storing Unit 270

The storing unit 270 stores various kinds of information. The storing unit 270 stores, for example, a setting table for generating the data for printing multiple times.

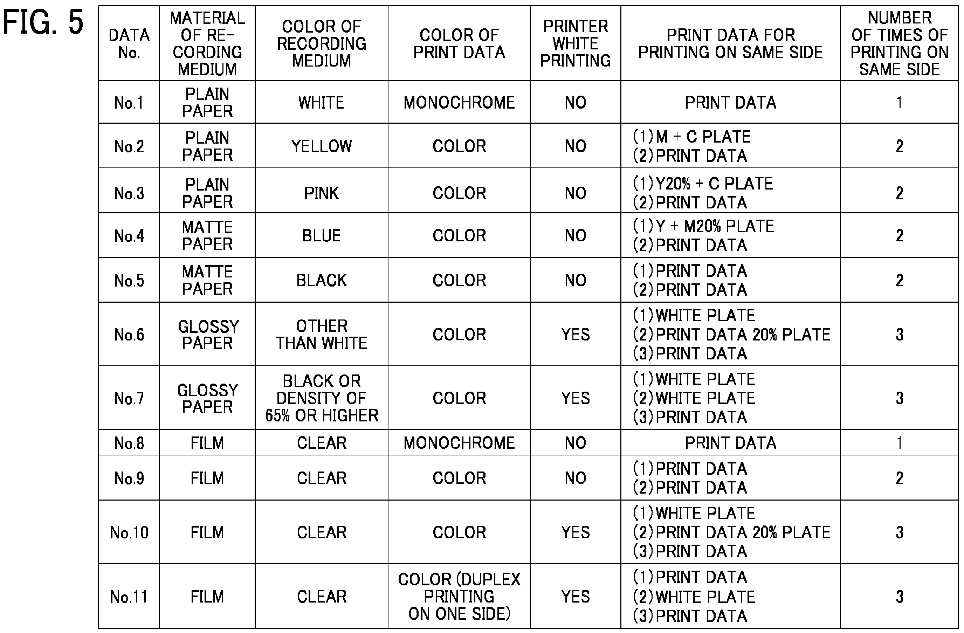

FIG. 5 is an example of a setting table related to the data for printing multiple times on the same side.

The storing unit 270 stores the setting table illustrated in FIG. 5. The setting table includes data related to the material of the recording medium 2, data related to the color of the recording medium 2, data related to the color of the print data, data related to whether to perform white printing, data for printing multiple times on the same side, and data related to the number of times of printing on the same side.

Examples of the data related to the material of the recording medium 2 include plain paper, matte paper, glossy paper, and film. Examples of the data related to the color of the recording medium 2 include white, yellow, pink, blue, black, a color other than white, black having a density of 65% or higher, and clear (transparent). Examples of the data related to the color of the print data include monochrome and color. The data related to the color of the print data may include information indicating duplex color printing on one side of the recording medium.

Examples of the print data for printing on the same side include print data, print data 20%, white plate, M + C plate, Y20% + C plate, and Y + M20% plate. The print data referred herein is the initial print data before the data for printing multiple times is generated. The print data 20% indicates print data having a color density of 20%. The white plate indicates white printing. The M + C plate indicates printing in magenta (M) and cyan (C). The Y20% + C plate indicates printing in yellow (Y) having a density of 20% and cyan (C). Y + M20% plate indicates printing in yellow (Y) and magenta (M) having a density of 20%. The print data for printing on the same side may include data related to other colors, data related to density, and data related to the order of printing.

The multi-printing control unit 260 can generate data for printing multiple times on the same side of the recording medium 2 with reference to the setting table illustrated in FIG. 5, for example.

A description is given below of data for printing multiple times.

The multi-printing data generation unit 258 can generate print data for printing multiple times by adjusting the color and/or density from the initial print data with reference to the setting table for adjustment (FIG. 5) based on information such as the color and density of the original print data (initial print data), the color and material of the recording medium 2 on which an image is printed, and the printer (model) as the image forming apparatus 100. The print data for printing multiple times may be referred to as data for printing multiple times or simply as multi-printing data in the following description.

For example, when the image forming apparatus 100 prints on the recording medium 2 that is yellow plain paper as a non-white-printing printer, the multi-printing data generation unit 258 can generate the multi-printing data for the first printing in magenta (M) and cyan (C) from the initial print data and then generate the multi-printing data for the second printing same as the initial print data on the same side.

When the image forming apparatus 100 prints on the recording medium 2 that is pink plain paper as a non-white-printing printer, the multi-printing data generation unit 258 may generate the multi-printing data for the first printing in yellow(Y) having a density of 20% and cyan (C) from the initial print data and then generate the multi-printing data for the second printing same as the initial print data on the same side.

The image forming apparatus 100 can read, with the sensor 60, the color and/or density of the print result on the recording medium 2 being conveyed. The image forming apparatus 100 compares the color and/or density of the print result with the color and/or density of the print data instructed to be printed. Thus, the image forming apparatus 100 can end the printing and output the recording medium 2 when the difference in color and/or density is within a predetermined range.

When the difference in color and/or density is within the predetermined range and the multi-printing data for the next printing is present in the image forming apparatus 100, the operation of the image forming apparatus 100 may be controlled to eject the recording medium without printing based on the next multi-printing data.

When the difference in color and/or density is lower than the predetermined range and the multi-printing data for the next printing is absent in the image forming apparatus 100, the multi-printing data generation unit 258 can additionally generate the multi-printing data to compensate for the insufficient color and/or density. The image forming apparatus 100 can perform additional printing on the same side based on the multi-printing data generated additionally. This can increase the number of times of printing.

When the difference in color and/or density is lower than the predetermined range but exceeds the predetermined range when the image forming apparatus 100 prints the multi-printing data for the next printing, the multi-printing data generation unit 258 may generate the multi-printing data by subtraction of the color and/or density of the multi-printing data for the next printing and perform additional printing. This can prevent the color and/or density from exceeding the predetermined range in the next printing.

When the difference in color and/or density is greater than the predetermined range and the multi-printing data for compensating for the excess of color and/or density can be generated, the image forming apparatus 100 may cancel the multi-printing data for the subsequent printing, generate the multi-printing data for compensating for the excess of color and/or density, and print the generated multi-printing data.

The multi-printing data includes print data generated by adjusting the color and/or density from the initial print data based on information such as the color and material of the recording medium 2 on which an image is printed, the printer (model), the color and/or density of the print result, and a setting table including the color and/or density and the number of times of printing.

When normal print data is printed multiple times, the color or density may be light or dark. Since the image forming apparatus 100 can generate the multi-printing data with the color and/or density adjusted from the initial print data, the image forming apparatus 100 can print with the color and/or density of the initial print data even when the color or material of the recording medium 2 changes or the printer (model) for printing changes, for example.

A description is given below of an operation to print multiple times on the same side using a reverse conveying operation.

The image forming apparatus 100 can perform the reverse conveying operation (switchback), which is an operation to reverse the recording medium 2 with the first conveyance mechanism 20 and the second conveyance mechanism 50. The image forming apparatus 100 can print on both the front side 2a and the back side 2b of the recording medium 2. The image forming apparatus 100 can print multiple times on the same side by performing the reverse conveying operation multiple times.

For example, to print twice on the front side 2a of the recording medium 2, the image forming apparatus 100 controls the operations of the first conveyance mechanism 20 and the second conveyance mechanism 50 to perform the reverse conveying operation twice after printing on the front side 2a. After printing on the front side 2a, the multi-printing control unit 260 reverses the recording medium 2 twice (from the front side 2a to the back side 2b and back to the front side 2a), thus supplying the recording medium 2 to the transfer unit 32 to print on the front side 2a again.

To print twice on each of the front side 2a and the back side 2b, the image forming apparatus 100 reverses the recording medium 2 after the first printing on the front side 2a, performs the first printing on the back side 2b, reverses the recording medium 2 again, performs the second printing on the front side 2a, reverses the recording medium 2 again, and performs the second printing on the back side 2b. After the second printing on the back side 2b, the image forming apparatus 100 ejects the recording medium 2.

A description is given below of an operation to print multiple times on the same side without using the reverse conveying operation.

The image forming apparatus 100 can perform an operation to print multiple times on the same side without using the reverse conveying operation. In the image forming apparatus 100, the recording medium 2 passes through the shortcut portion 52 after the first printing and is returned to the transfer unit 32 without passing through the switchback portion 51. Thus, the image forming apparatus 100 can print multiple times on the same side. In the image forming apparatus 100, the recording medium 2 can be supplied to the transfer unit 32 without being reversed. For example, to print ten times simply on the front side 2a, the image forming apparatus 100 returns the recording medium 2 to the transfer unit 32 through the shortcut portion 52 after the first printing on the front side 2a and performs the second printing on the front side 2a. The image forming apparatus 100 repeats this operation, thus continuously printing ten times in total on the front side 2a.

A description is given below of the generation of the multi-printing data.

The image forming apparatus 100 generates the data for printing multiple times on the same side of the recording medium 2. Specifically, the multi-printing data generation unit 258 generates the data for printing multiple times on the same side of the recording medium 2. In addition, the multi-printing data generation unit 258 can set the number of times of printing and the printing order.

A description is given below of a first case (Case 1) of generating the multi-printing data.

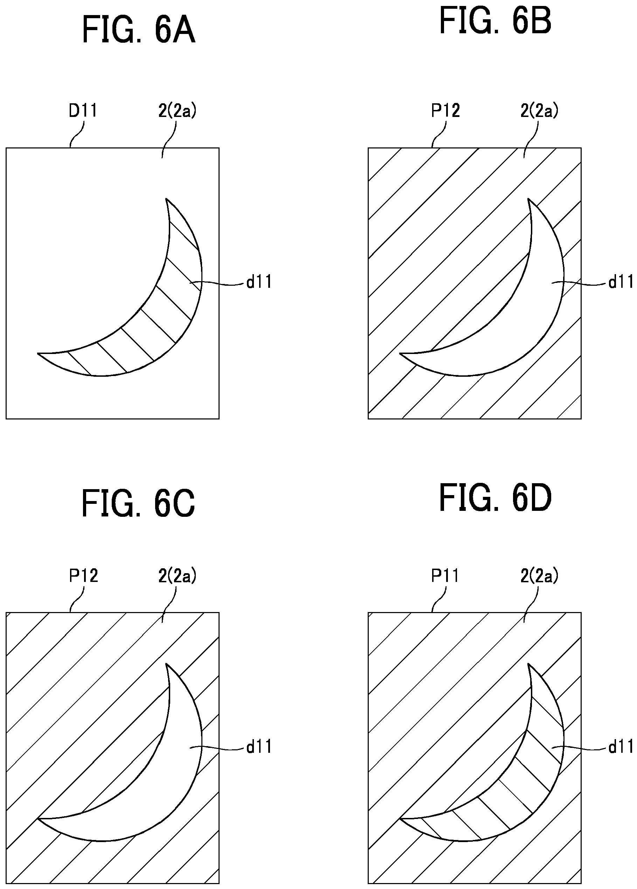

FIGS. 6A to 6D are diagrams illustrating an example (Case 1) of the data for printing multiple times on the same side.

The recording medium 2 in Case 1 is glossy paper. The color of the recording medium 2 is black. FIG. 6A is a diagram illustrating print data D11. The print data D1 1 illustrated in FIG. 6A is image data representing a crescent d11 in yellow, for example. In FIGS. 6A to 6D, the difference in color is indicated by the difference in hatching. The example of the print data illustrated in FIGS. 6A to 6D corresponds to data No. 7 in FIG. 5.

FIG. 6B is a plan view of the front side 2a of the recording medium 2 after the first printing with print data P12 (white plate) based on the print data D11. FIG. 6C is a plan view of the front side 2a of the recording medium 2 after the second printing with the print data P12 (white plate) based on the print data D11. FIG. 6D is a plan view of the front side 2a of the recording medium 2 after the third printing with print data P11 (white plate) based on the print data D 11.

The multi-printing data generation unit 258 generates the print data P11 and the print data P12 from the print data D11. The multi-printing data generation unit 258 generates the data for printing multiple times so that the printing is performed once based on the print data P11 after the printing is performed twice based on the print data P12. The print data P11 is image data representing the crescent d11 in yellow. The print data P12 is image data representing the crescent d11 in white.

The image forming apparatus 100 can print the print data P11 after printing the print data P12 (white plate) twice on the recording medium 2 that is black glossy paper.

A description is given below of a second case (Case 2) of generating the multi-printing data.

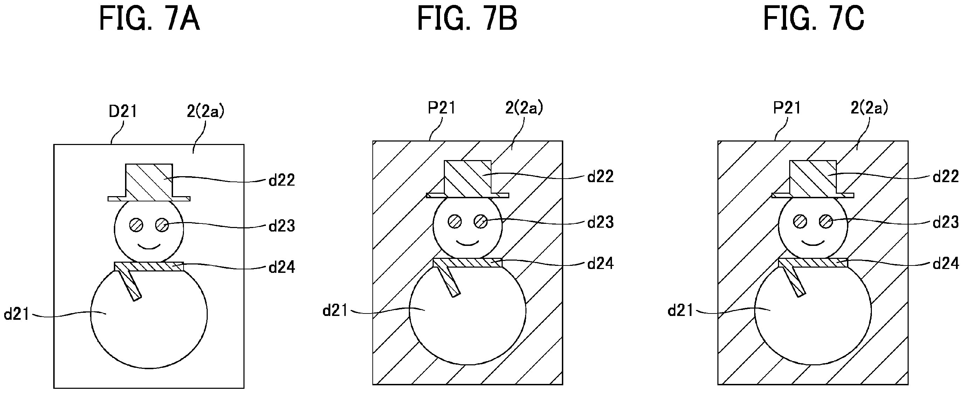

FIGS. 7A to 7C are diagrams illustrating an example (Case 2) of the data for printing multiple times on the same side.

The recording medium 2 in Case 2 is matte paper. The color of the recording medium 2 is black.

FIG. 7A is a diagram illustrating print data D21. The print data D21 illustrated in FIG. 7A is image data representing a snowman d21 in white, for example. In print data D21, the snowman d21 wears a hat d22 in green, has eyes and mouth d23 in blue, and wears a muffler (scarf) d24 in red around the neck. In FIGS. 7A to 7C, the difference in color is indicated by the difference in hatching. The example of the print data illustrated in FIGS. 7A to 7C corresponds to data No. 5 in FIG. 5.

FIG. 7B is a plan view of the front side 2a of the recording medium 2 after the first printing with print data P21 based on the print data D21. FIG. 7C is a plan view of the front side 2a of the recording medium 2 after the second printing with the print data P21 based on the print data D21. The print data P21 for printing multiple times is the same data as the initial print data D21.

The multi-printing data generation unit 258 generates the print data P21 for printing multiple times from the print data D21.

The image forming apparatus 100 prints the print data P21 twice on the recording medium 2 that is black matte paper.

A description is given below of a third case (Case 3) of generating the multi-printing data.

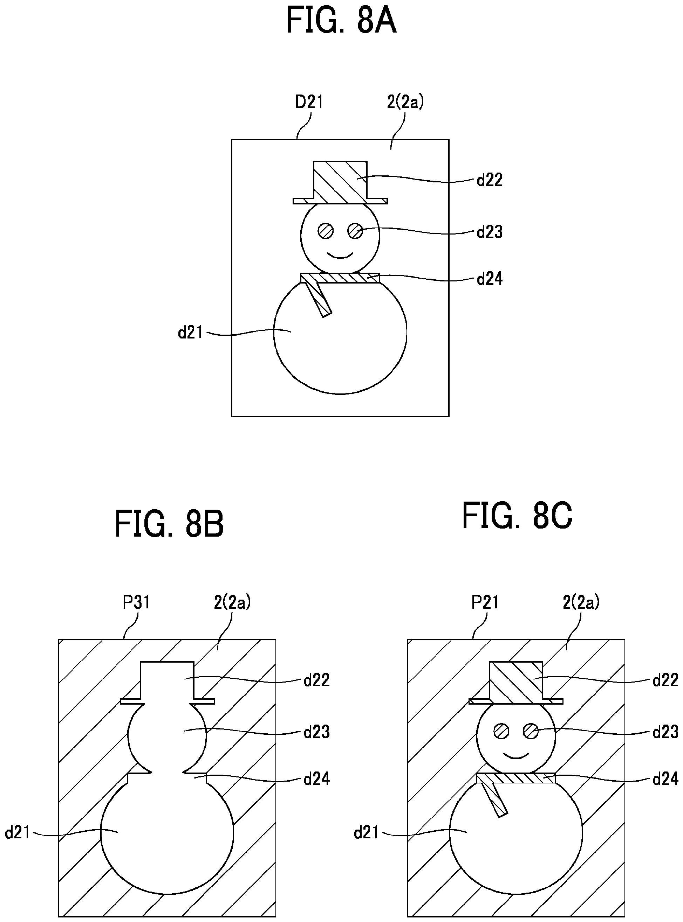

FIGS. 8A to 8C are diagrams illustrating an example (Case 3) of the data for printing multiple times on the same side.

The recording medium 2 in Case 3 is coated paper. The color of the recording medium 2 is black.

FIG. 8A is a diagram illustrating the print data D21. The print data D21 illustrated in FIG. 8A is the same as that illustrated in FIG. 7A. In FIGS. 8A to 8C, the difference in color is indicated by the difference in hatching.

FIG. 8B is a plan view of the front side 2a of the recording medium 2 after the first printing with print data P31 based on the print data D21. FIG. 8C is a plan view of the front side 2a of the recording medium 2 after the second printing with the print data P21 based on the print data D21. The print data P31 is print data of the white plate and includes the snowman d21 in white, the hat d22 in white, the eyes and mouth d23 in white, and the muffler d24 in white.

The multi-printing data generation unit 258 generates the print data P21 and the print data P31 from the print data D21.

The image forming apparatus 100 prints the print data P21 after printing the print data P31 on the recording medium 2 that is black coated paper.

A description is given below of a fourth case (Case 4) of generating the multi-printing data.

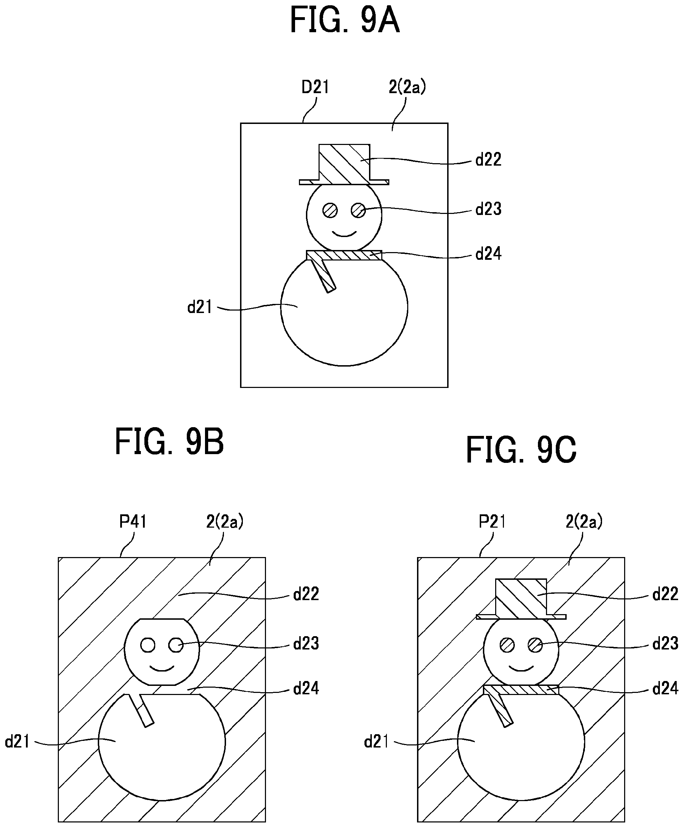

FIGS. 9A to 9C are diagrams illustrating an example (Case 4) of the data for printing multiple times on the same side.

The recording medium 2 in Case 4 is thick paper. The color of the recording medium 2 is black.

FIG. 9A is a diagram illustrating the print data D21. The print data D21 illustrated in FIG. 9A is the same as that illustrated in FIG. 7A. In FIGS. 9A to 9C, the difference in color is indicated by the difference in hatching.

FIG. 9B is a plan view of the front side 2a of the recording medium 2 after the first printing with print data P41 based on the print data D21. FIG. 9C is a plan view of the front side 2a of the recording medium 2 after the second printing with the print data P21 based on the print data D21. The print data P41 includes the snowman d21 in white. The print data P41 does not include color data for the hat d22, the eyes and mouth d23, and the muffler d24.

The multi-printing data generation unit 258 generates the print data P21 and the print data P41 from the print data D21.

The image forming apparatus 100 prints the print data P21 after printing the print data P41 on the recording medium 2 that is black, thick paper.

A description is given below of a fifth case (Case 5) of generating the multi-printing data.

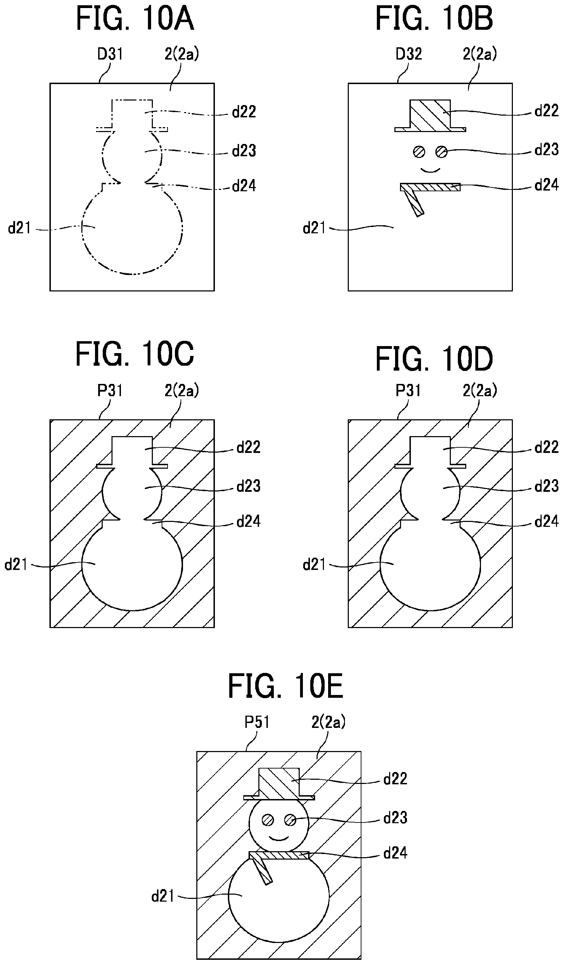

FIGS. 10A to 10E are diagrams illustrating an example (Case 5) of the data for printing multiple times on the same side.

The recording medium 2 in Case 5 is matte paper. The color of the recording medium 2 is black.

FIG. 10A is a diagram illustrating print data D31. The print data D31 illustrated in FIG. 10A indicates the entire outline of the snowman d21, the hat d22, and the muffler d24, for example. The print data D31 does not include color data. In FIGS. 10A to 10E, the difference in color is indicated by the difference in hatching.

Print data D32 illustrated in FIG. 10B indicates the hat d22 in green, the eyes and mouth d23 in blue, and the muffler d24 in red. The print data D32 may be data each in the same color. The print data may simply indicate the hat d22 in green, the eyes and mouth d23 in blue, or the muffler d24 in red.

The print data D31 and the print data D32 are the initial print data received by the data input unit 254.

FIG. 10C is a plan view of the front side 2a of the recording medium 2 after the first printing with the print data P31 based on the print data D31 and the print data D32.

FIG. 10D is a plan view of the front side 2a of the recording medium 2 after the second printing with the print data P31 based on the print data D31 and the print data D32.

FIG. 10E is a plan view of the front side 2a of the recording medium 2 after the third printing with print data P51 based on the print data D31 and the print data D32. The print data P31 is print data of the white plate and includes the snowman d21 in white, the hat d22 in white, the eyes and mouth d23 in white, and the muffler d24 in white. The print data P51 indicates the hat d22 in green, the eyes and mouth d23 in blue, and the muffler d24 in red, and may be the same as the print data D32.

The multi-printing data generation unit 258 generates the print data P31 from the print data D31. The multi-printing data generation unit 258 generates the print data P51 from the print data D32.

The image forming apparatus 100 prints the print data P51 after printing the print data P31 twice on the recording medium 2 that is black matte paper.

A description is given below of a sixth case (Case 6) of generating the multi-printing data.

The recording medium 2 in Case 6 is plain paper. The color of the recording medium 2 is yellow. The initial print data is color data. The image forming device 30 performs multicolor printing. The initial print data in Case 6 does not include white printing. Case 6 corresponds to data No. 2 in FIG. 5.

The multi-printing data generation unit 258 generates the print data of the M + C plate as first print data from the initial print data. The initial print data is used as second print data.

To perform color printing on the recording medium 2 that is yellow plain paper, the image forming apparatus 100 performs first printing based on the print data of the M + C plate, and then performs second printing based on the initial print data.

A description is given below of a seventh case (Case 7) of generating the multi-printing data.

The recording medium 2 in Case 7 is a film. The color of the recording medium 2 is clear (transparent). The initial print data is color data. The image forming device 30 performs multicolor printing. The initial print data in Case 7 includes white printing. Case 7 corresponds to data No. 10 in FIG. 5.

The multi-printing data generation unit 258 generates the print data of the white plate as the first print data from the initial print data. The print data of the white plate may include a specific portion in white or include the entire surface in white. The multi-printing data generation unit 258 generates the print data 20%, which is the print data having a color density of 20% of the color density of the initial print data, as the second print data from the initial print data. The initial print data is used as third print data.

To perform color printing on the recording medium 2 that is a transparent film, the image forming apparatus 100 performs the first printing based on the print data of the white plate, performs the second printing based on the print data 20%, and performs third printing based on the initial print data. After performing the second printing in a color at a first density (for example, 20%), the image forming apparatus 100 can perform the third printing in the color of the second printing at a second density (for example, 100%) higher than the first density.

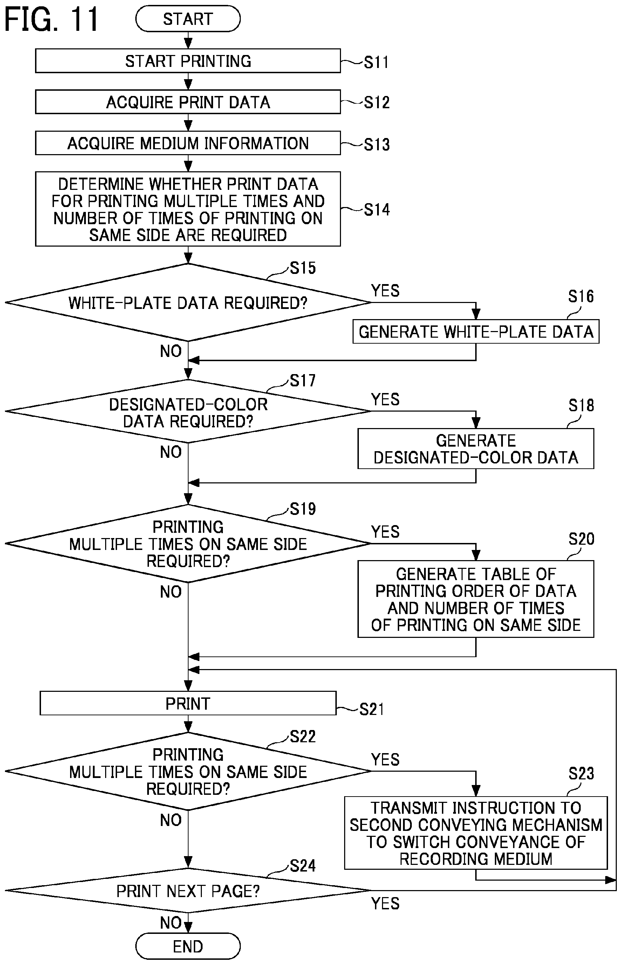

Referring to FIG. 11, a description is given below of a control process performed by the image forming apparatus 100.

FIG. 11 is a flowchart illustrating a control process performed by the image forming apparatus 100 according to an embodiment of the present disclosure.

For example, the image forming apparatus 100 starts the process illustrated in FIG. 11 in response to an input of an instruction to start printing. The functional units illustrated in FIG. 4 allows the control unit 210 to perform the process illustrated in FIG. 11.

In step S11, the image forming apparatus 100 starts printing. The control unit 210 receives a command signal from the printer driver 110 and starts printing. In step S12, the control unit 210 acquires print data. The control unit 210 acquires initial print data from, for example, an external host PC. In step S13, the control unit 210 acquires medium information. The control unit 210 can acquire the medium information included in the information acquired from the printer driver 110, for example. The control unit 210 may acquire the medium information based on an instruction input through the control panel 111. The control unit 210 acquires the information on the material and color of the recording medium 2 as the medium information.

In step S14, the multi-printing data generation unit 258 of the control unit 210 determines whether the print data for printing multiple times on the same side and the number of times of printing on the same side are required. The multi-printing data generation unit 258 determines whether the number of times of printing on the same side is required with reference to the setting table (FIG. 5) stored in the storing unit 270. The determination as to whether the number of times of printing on the same side is required includes determination as to whether to print multiple times on the same side and calculation of the number of times of printing on the same side. The multi-printing data generation unit 258 determines the number of times of printing on the same side based on the medium information and the initial print data.

For example, when the image forming apparatus 100 performs monochrome printing on the recording medium 2 that is white plain paper, the multi-printing data generation unit 258 determines that the number of times of printing on the same side is 1 (once). When the image forming apparatus 100 performs color printing on the recording medium 2 that is black glossy paper, the multi-printing data generation unit 258 determines that the number of times of printing on the same side is 3 (three times).

In step S 15, the multi-printing data generation unit 258 determines whether white-plate data is required. The multi-printing data generation unit 258 determines whether the white-plate data is required based on the medium information and the print data with reference to the setting table illustrated in FIG. 5. When the "print data for printing on the same side" includes the "white plate" in the setting table, the multi-printing data generation unit 258 determines that the white-plate data is required (YES in step S15). When the "print data for printing on the same side" does not include the "white plate" in the setting table, the multi-printing data generation unit 258 determines that the white-plate data is not required (NO in step S15).

For example, when the image forming apparatus 100 performs color printing on the recording medium 2 that is black glossy paper, the multi-printing data generation unit 258 determines that the white-plate data is required (YES in step S 15). When the image forming apparatus 100 performs color printing on the recording medium 2 that is black matte paper, the multi-printing data generation unit 258 determines that the white-plate data is not required (NO in step S15).

When the control unit 210 determines that the white-plate data is required (YES in step S 15), the process proceeds to step S16. When the control unit 210 determines that the white-plate data is not required (NO in step S 15), the process proceeds to step S 17.

In step S16, the multi-printing data generation unit 258 generates the white-plate data as print data for printing multiple times from the initial print data. After the operation in step S 16, the control unit 210 proceeds to step S17.

In step S17, the multi-printing data generation unit 258 determines whether designated-color data is required. The multi-printing data generation unit 258 determines whether the designated-color data is required based on the medium information and the print data with reference to the setting table illustrated in FIG. 5. When the "print data for printing on the same side" includes the "M + C plate," "Y20% + C plate," or "Y + M20% plate" in the setting table, the multi-printing data generation unit 258 determines that the designated-color data is required (YES in step S17). When the "print data for printing on the same side" does not include the "M + C plate," "Y20% + C plate," or "Y + M20% plate" in the setting table, the multi-printing data generation unit 258 determines that the designated-color data is not required (NO in step S17).

For example, when the image forming apparatus 100 performs color printing on the recording medium 2 that is yellow plain paper, the multi-printing data generation unit 258 determines that the designated-color data ("M + C plate") is required (YES in step S17). When the image forming apparatus 100 performs color printing on the recording medium 2 that is black glossy paper, the multi-printing data generation unit 258 determines that the designated-color data is not required (NO in step S17).

When the control unit 210 determines that the designated-color data is required (YES in step S17), the process proceeds to step S18. When the control unit 210 determines that the designated-color data is not required (No in step S17), the process proceeds to step S19.

In step S18, the multi-printing data generation unit 258 generates designated-color data as print data for printing multiple times from the initial print data. The multi-printing data generation unit 258 generates the designated-color data of the corresponding color from the initial print data with reference to the setting table. For example, when the image forming apparatus 100 performs color printing on the recording medium 2 that is yellow plain paper, the multi-printing data generation unit 258 generates the designated-color data ("M + C plate"). After the operation in step S18, the control unit 210 proceeds to step S19.

In step S19, the multi-printing setting unit 262 determines whether printing multiple times on the same side is required. The multi-printing setting unit 262 determines whether printing multiple times on the same side is required based on the medium information and the print data with reference to the setting table illustrated in FIG. 5. When the "number of times of printing on the same side" indicates 2 (twice) or more in the setting table, the multi-printing setting unit 262 determines that printing multiple times on the same side is required (YES in step S19). When the "number of times of printing on the same side" indicates 1 (once) in the setting table, the multi-printing setting unit 262 determines that printing multiple times on the same side is not required (NO in step S19).

For example, when the image forming apparatus 100 performs color printing on the recording medium 2 that is black glossy paper, the multi-printing setting unit 262 determines that printing multiple times on the same side is required (YES in step S19). When the image forming apparatus 100 performs monochrome printing on the recording medium 2 that is white plain paper, the multi-printing setting unit 262 determines that printing multiple times on the same side is not required (NO in step S19).

When the control unit 210 determines that printing multiple times on the same side is required (YES in step S19), the process proceeds to step S20. When the control unit 210 determines that printing multiple times on the same side is not required (NO in step S19), the process proceeds to step S21.

In step S20, the control unit 210 generates a table of the printing order of the print data for printing multiple times on the same side and the number of times of printing on the same side. The multi-printing data generation unit 258 may generate a table of the printing order of the print data for printing multiple times on the same side with reference to the setting table. The multi-printing setting unit 262 may generate a table of the number of times of printing on the same side with reference to the setting table.

For example, when the image forming apparatus 100 performs color printing on the recording medium 2 that is black glossy paper, the control unit 210 generates the table of the printing order so that the white plate is printed as the first printing, the white plate is printed as the second printing, and the print data is printed as the third printing. In this case, the control unit 210 generates the table of the number of times of printing indicating the number of times of printing as 3 (three times). After the operation in step S20, the control unit 210 proceeds to step S21.

In step S21, the image forming apparatus 100 prints on the recording medium 2. In step S22, the control unit 210 determines whether printing multiple times on the same side is required. In step S22, the control unit 210 performs the same operation as that in step S19.

When the control unit 210 determines that printing multiple times on the same side is required (YES in step S22), the process proceeds to step S23. When the control unit 210 determines that printing multiple times on the same side is not required (NO in step S22), the process proceeds to step S24.

In step S23, the control unit 210 transmits an instruction to an identical printing mechanism of the second conveyance mechanism 50 to switch the conveyance of the recording medium 2. The identical printing mechanism of the second conveyance mechanism 50 switches the conveyance passage of the recording medium 2 so that the recording medium 2 passes through the shortcut portion 52 without passing through the switchback portion 51. After the operation in step S23, the control unit 210 returns to step S21 and repeats the operations in steps S21 and S22.

In step S24, the control unit 210 determines whether the next page to be printed is present. When the control unit 210 determines that the next page to be printed is present (YES in step S24), the process returns to step S21. When the control unit 210 determines that the next page to be printed is absent (NO in step S24), the process illustrated in FIG. 11 ends.

### Preliminary Sheet Conveyance Mechanism

The image forming apparatus 100 may include a preliminary sheet conveyance mechanism. The preliminary sheet conveyance mechanism allows a recording medium to pass through the first conveyance mechanism 20 and the second conveyance mechanism 50 before printing. The sheet conveyance means the conveyance of the recording medium 2. The image forming apparatus 100 can perform preliminary sheet conveyance before printing to stabilize the condition of the recording medium 2. In a printer that heats and fixes toner, the recording medium 2 is shrunk under heat. In the image forming apparatus 100, the recording medium 2 is conveyed without printing and shrunk in advance to reduce misalignment in the subsequent multiple times of printing. The image forming apparatus 100 may perform the preliminary sheet conveyance when the temperature of the fixing device 33 is lower than the normal temperature.

### Standby Mechanism 56

The image forming apparatus 100 may include a standby mechanism 56. The image forming apparatus 100 can cool the recording medium 2 and dry the ink by standing by after printing. Thus, the image forming apparatus 100 can stabilize the condition of the recording medium 2.

In a printer that heats and fixes toner, a sheet is heated by multiple times of printing, thus hampering the transfer of the toner. The image forming apparatus 100 dissipates the heat of the sheet to maintain the print quality even when printing multiple times thereafter.

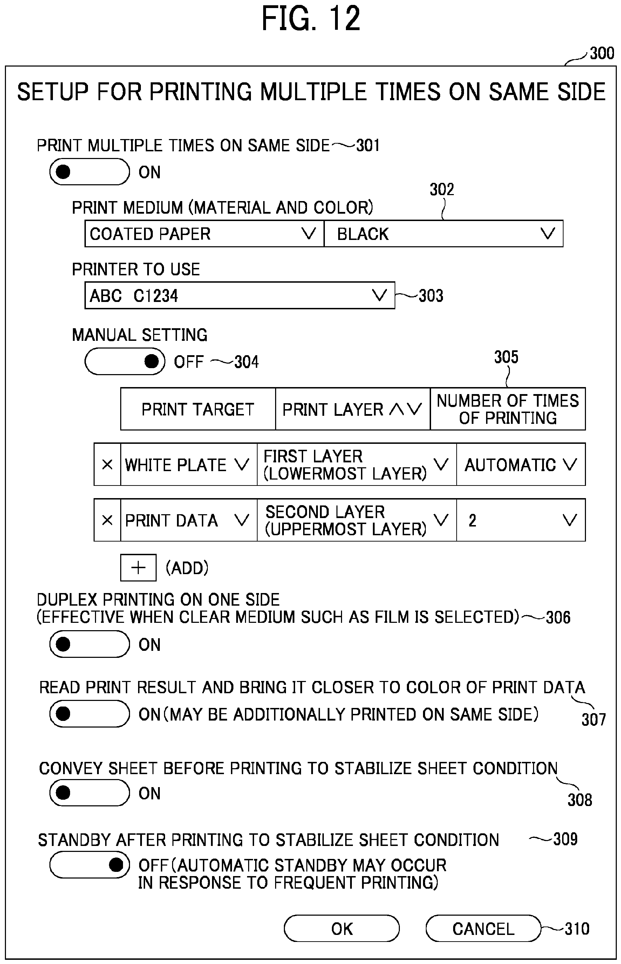

Referring to FIG. 12, a description is given of an example of an operation screen 300 for setting the multiple times of printing on the same side.

For example, the operation screen 300 illustrated in FIG. 12 may be displayed on a display of a host PC that is an external apparatus connected to the control unit 210 or on the control panel 111.

The operation screen 300 includes a display area 301 to display whether to print multiple times on the same side. The display area 301 displays ON/OFF to indicate whether to print multiple times on the same side. The user can select whether to print multiple times on the same side by selecting ON/OFF.

The operation screen 300 includes a display area 302 to display the medium information. The display area 302 displays information on the material and color of the recording medium 2. The user can input the medium information by operating the operation screen 300 to select the material and color of the recording medium 2.

The operation screen 300 includes a display area 303 to display a printer to be used. The display area 303 displays information on the model of the printer as the image forming apparatus 100. The user can select the model of the printer to be used by operating the operation screen 300.

The operation screen 300 includes a display area 304 to display ON/OFF for the manual setting. The display area 304 displays ON/OFF to indicate whether to manually set the multiple times of printing on the same side. The user can select whether to manually set the multiple times of printing on the same side by operating the operation screen 300.

The operation screen 300 includes a display area 305 to display items related to the setting of the multiple times of printing on the same side. The display area 305 displays "print target," "print layer," and "number of times of printing" as items related to the setting. The details displayed in the "print target" include "white plate" and "print data." The details displayed in the "print layer" include "first layer (lowermost layer)" and "second layer (uppermost layer)." The details displayed in the "number of times of printing" include "automatic" and "2 (twice)." The user can change the setting of the multiple times of printing on the same side by operating the operation screen 300 to select the details of each item. The display area 305 may include keys for increasing or decreasing the display details.

The operation screen 300 includes a display area 306 to display the setting as to whether to perform duplex printing on one side of the recording medium 2. The display area 306 displays ON/OFF to indicate whether to perform the duplex printing on one side. The user can select whether to perform the duplex printing on one side by operating the operation screen 300.

The operation screen 300 includes a display area 307 to display the setting as to whether to read a print result and bring the print result closer to the color of the print data. A display area 307 displays ON/OFF to indicate whether to read a print result and bring the print result closer to the color of the print data. The user can select whether to read a print result and bring the print result closer to the color of the print data by operating the operation screen 300.

The operation screen 300 includes a display area 308 to display the setting as to whether to convey a sheet (recording medium) before printing to stabilize the sheet condition. The "sheet condition" is the condition of the recording medium 2. The display area 308 displays ON/OFF to indicate whether to convey a sheet before printing to stabilize the sheet condition. The user can select whether to convey a sheet before printing to stabilize the sheet condition by operating the operation screen 300.

The operation screen 300 includes a display area 309 to display the setting as to whether to stand by after printing to stabilize the sheet condition. A display area 309 displays ON/OFF to indicate whether to stand by after printing to stabilize the sheet condition. The user can select whether to stand by after printing to stabilize the sheet condition by operating the operation screen 300.

A description is given below of several operational advantages of the image forming apparatus 100 according to the first embodiment.

The image forming apparatus 100 according to the first embodiment includes the image forming device 30, the first conveyance mechanism 20, the second conveyance mechanism 50, and the control unit 210. The image forming device 30 forms an image on the recording medium 2. The first conveyance mechanism 20 conveys the recording medium 2 to the secondary transfer roller 36. The second conveyance mechanism 50 conveys the recording medium 2 having passed through the secondary transfer roller 36 to the secondary transfer roller 36 again. The control unit 210 controls multiple times of printing operations of the secondary transfer roller 36. The image forming apparatus 100 can perform multiple times of printing on the same side of the recording medium 2 with the common image forming device 30. The multiple times of printing include the first printing and the second printing. The first printing is printing on the recording medium 2 based on first print data (the print data P31). The second printing is printing on the recording medium 2 subjected to the first printing based on second print data (the print data P21) different from the first print data.

The image forming apparatus 100 having such a configuration can print multiple times on the front side 2a of the recording medium 2. The image forming apparatus 100 can form an image in the second printing on the front side 2a on which the image is formed in the first printing. The image forming apparatus 100 can enhance the color quality of images by printing multiple times on the same side (the front side 2a) of the recording medium 2. For example, when the density of the image is low resulting from the first printing, the color of the recording medium 2 may affect the color of the image, and the image in a desired color may not be obtained. The image forming apparatus 100 can prevent the color of the recording medium 2 from affecting the color of the image by printing twice or more on the same side of the recording medium 2. The multiple times of printing may be three or more times of printing.

In the image forming apparatus 100, the second conveyance mechanism 50 can convey the recording medium 2 subjected to the first printing to the secondary transfer roller 36 without reversing the direction of conveyance of the recording medium 2.

In the image forming apparatus 100 having such a configuration, the recording medium 2 is conveyed through the shortcut portion 52 without passing through the switchback portion 51 to be supplied to the secondary transfer roller 36 again. By supplying the recording medium 2 to the secondary transfer roller 36 without reversing the direction of conveyance of the recording medium 2, the image forming apparatus 100 can shorten the time taken for conveyance of the recording medium 2. As a result, the printing efficiency of the image forming apparatus 100 can be enhanced.

The image forming apparatus 100 further includes the sensor 60 serving as a medium detector that detects the color of the recording medium 2 before printing. The control unit 210 sets the number of times of printing on the recording medium 2 based on the color of the recording medium 2 detected by the sensor 60 and controls the operations of the first conveyance mechanism 20, the second conveyance mechanism 50, and the image forming device 30 to perform the set number of times of printing on the recording medium 2.

The image forming apparatus 100 having such a configuration can change the number of times of printing on the recording medium 2 based on the color of the recording medium 2. Accordingly, the image forming apparatus 100 can enhance the color quality of images.

The image forming apparatus 100 further includes the sensor 60 as a printed-side detector that detects the condition of the printed side (the front side 2a) of the recording medium 2 subjected to the first printing. The control unit 210 can change the number of times of printing on the same side of the recording medium 2 based on the condition of the printed side detected by the sensor 60.

The multi-printing setting unit 262 can detect the color condition of the image on the printed side detected by the sensor 60 and increase or decrease the number of times of printing on the same side (the front side 2a) to bring the printed image closer to the initial print data. Accordingly, the image forming apparatus 100 can enhance the color quality of images.

The image forming apparatus 100 includes the sensor 60 as a medium detector that detects the color of the recording medium 2 before printing. The control unit 210 sets the color and density of the print data to be printed on the recording medium 2 based on the color of the recording medium 2 detected by the sensor 60 and controls the operations of the first conveyance mechanism 20, the second conveyance mechanism 50, and the image forming device 30 to print on the recording medium 2 according to the set color and density of the print data.

The image forming apparatus 100 having such a configuration can change the color to be printed on the recording medium 2 and the density of the color based on the color of the recording medium 2. Accordingly, the image forming apparatus 100 can enhance the color quality of images.

The image forming apparatus 100 includes the sensor 60 as the printed-side detector that detects the condition of the printed side (the front side 2a) of the recording medium 2 subjected to the first printing. The control unit 210 can change the color and density of the print data to be printed on the same side of the recording medium 2 based on the condition of the printed side detected by the sensor 60.

The multi-printing data generation unit 258 can detect the color condition of the image on the printed side detected by the sensor 60 and change the color and density of the print data to be printed on the same side (the front side 2a) to bring the printed image closer to the initial print data. Accordingly, the image forming apparatus 100 can enhance the color quality of images.

The image forming apparatus 100 further includes the fixing device 33. In each of the first printing and second printing, the image forming device 30 forms a toner image on the recording medium 2. The fixing device 33 heats the recording medium 2 bearing the toner image formed by the image forming device 30 to fix the toner image on the recording medium 2. The control unit 210 causes the fixing device 33 to heat the recording medium 2 without toner so that a toner image is formed on the recording medium 2 heated by the fixing device 33.

In the image forming apparatus 100, the recording medium 2 can pass the secondary transfer roller 36 and through the fixing device 33 before printing. Thus, in the image forming apparatus 100, the recording medium 2 can be heated and cooled before an image is formed on the recording medium 2. Since the recording medium 2 is shrunk before printing, the image forming apparatus 100 can print on the shrunk recording medium 2. As a result, the image forming apparatus 100 can reduce the misalignment of the printing positions due to the shrinkage of the recording medium 2.

In the image forming apparatus 100, the second conveyance mechanism 50 includes the standby mechanism 56 that temporarily stops the recording medium 2 subjected to the first printing and causes the recording medium 2 to stand by. After controlling the operation of the standby mechanism 56 to stop the recording medium 2 subjected to the first printing, the control unit 210 controls the operations of the first conveyance mechanism 20, the second conveyance mechanism 50, and the secondary transfer roller 36 to convey the recording medium 2 to the secondary transfer roller 36 and perform the second printing.

In the image forming apparatus 100 having such a configuration, the standby mechanism 56 can stop the recording medium 2 after printing. Accordingly, after stabilizing the condition of the recording medium 2, the image forming apparatus 100 can perform the second and subsequent printing on the same side of the recording medium 2.

In the image forming apparatus 100, the image forming device 30 can perform multicolor printing. The control unit 210 can control the operations of the first conveyance mechanism 20, the second conveyance mechanism 50, and the image forming device 30 to print in a single color on the recording medium 2 as the first printing, print in a color other than the single color at a first density as the second printing after the first printing, and print in the color of the second printing at a second density higher than the first density as third printing after the second printing.

The image forming apparatus 100 having such a configuration can enhance the color density, color area, and color expression as the printing result. The image forming apparatus 100 can enhance the color quality.

### The single color may be, for example, white or another color.

The image forming apparatus 100 can generate print data for enhancing a color area, color expression, and color quality from the print data. The image forming apparatus 100 can print multiple times on the same side of the recording medium 2. Therefore, the image forming apparatus 100 can print a color area and color expression that cannot be expressed by typical image forming apparatuses. The typical image forming apparatuses here refer to apparatuses that can print only once on the same side. The image forming apparatus 100 can print multiple times on the same side to enhance the color area, the color expression, and the color quality.

A description is given below of an image forming system.

An image forming system 1000 according to one or more embodiments is an image forming system for printing multiple times on the same side of the recording medium 2 with the common image forming device 30. The image forming system includes the first conveyance mechanism 20, the second conveyance mechanism 50, and the control unit 210. The first conveyance mechanism 20 conveys the recording medium 2 to the image forming device 30. The second conveyance mechanism 50 conveys the recording medium 2 having passed through the image forming device 30 to the image forming device 30 again. The control unit 210 controls multiple times of printing operations of the image forming device 30. The control unit 210 controls the operations of the first conveyance mechanism 20, the second conveyance mechanism 50, and the image forming device 30 to cause the image forming device 30 to perform the first printing on the recording medium 2 based on first print data and perform the second printing on the recording medium 2 subjected to the first printing based on second print data different from the first print data.

A description is given below of an image forming method.

An image forming method according to one or more embodiments is an image forming method for printing multiple times on the same side of the recording medium 2 with the common image forming device 30. The method includes first conveying, second conveying, and controlling. The first conveying includes conveying the recording medium 2 to the image forming device 30. The second conveying includes conveying the recording medium 2 having passed through the image forming device 30 to the image forming device 30 again. The controlling includes controlling multiple times of printing operations of the image forming device 30. The controlling includes controlling the operations of the first conveyance mechanism 20, the second conveyance mechanism 50, and the image forming device 30 to cause the image forming device 30 to perform the first printing on the recording medium 2 based on first print data and perform the second printing on the recording medium 2 subjected to the first printing based on second print data different from the first print data.

In the above-described embodiment, the multicolor image forming apparatus 100 including the drum-shaped photoconductors for multiple colors is exemplified. However, the image forming apparatus may include a monochromatic drum-shaped photoconductor and perform monochromatic image formation.

The image forming apparatus may be a liquid discharge apparatus. The liquid discharge apparatus includes a discharge head that discharges ink.

A description is given below of several aspects of the present disclosure.

According to a first aspect, an image forming apparatus incudes an image forming device, a first conveyance mechanism, a second conveyance mechanism, and a control unit. The image forming device forms an image on a recording medium. The first conveyance mechanism conveys the recording medium to the image forming device. The second conveyance mechanism conveys the recording medium having passed through the image forming device to the image forming device again. The control unit controls multiple times of printing operations of the image forming device. The image forming device can perform multiple times of printing on the same side of the recording medium. The multiple times of printing include first printing and second printing. The first printing is printing on the recording medium based on first print data. The second printing is printing on the recording medium subjected to the first printing based on second print data different from the first print data.

According to a second aspect, in the image forming apparatus of the first aspect, the second conveyance mechanism conveys the recording medium subjected to the first printing to the image forming device without reversing a direction of conveyance of the recording medium.

According to a third aspect, the image forming apparatus of the first or second aspect further includes a medium detector that detects the color of the recording medium before printing. The control unit sets the number of times of printing on the recording medium based on the color of the recording medium detected by the medium detector and controls the operations of the first conveyance mechanism, the second conveyance mechanism, and the image forming device to perform the set number of times of printing on the recording medium.

According to a fourth aspect, the image forming apparatus of any one of the first to third aspects further includes a printed-side detector that detects the condition of a printed side of the recording medium subjected to the first printing. The control unit changes the number of times of printing on the recording medium based on the condition of the printed side detected by the printed-side detector.

According to a fifth aspect, the image forming apparatus of any one of the first to fourth aspects further includes a medium detector that detects the color of the recording medium before printing. The control unit sets the color and density of print data to be printed on the recording medium based on the color of the recording medium detected by the medium detector and controls the operation of the image forming device to print on the recording medium according to the set color and density of the print data.

According to a sixth aspect, the image forming apparatus of any one of the first to fifth aspects further includes a printed-side detector that detects the condition of a printed side of the recording medium subjected to the first printing. The control unit changes the color and density of print data to be printed on the recording medium based on the condition of the printed side detected by the printed-side detector.

According to a seventh aspect, the image forming apparatus of any one of the first to sixth aspects further includes a fixing device. The image forming device forms a toner image on the recording medium in each of the first printing and the second printing. The fixing device heats the recording medium bearing the toner image formed by the image forming device to fix the toner image on the recording medium. The control unit causes the fixing device to heat a recording medium without toner and causes the image forming device to form the toner image on the recording medium heated by the fixing device.

According to an eighth aspect, in the image forming apparatus of any one of the first to seventh aspects, the second conveyance mechanism includes a standby mechanism that temporarily stops the recording medium subjected to the first printing and causes the recording medium to stand by. The control unit causes the image forming device to perform the second printing on the recording medium conveyed to the image forming device after controlling the operation of the standby mechanism to stop the recording medium subjected to the first printing.

According to a ninth aspect, in the image forming apparatus of any one of the first to eighth aspects, the image forming device can perform multicolor printing. The control unit controls the operations of the first conveyance mechanism, the second conveyance mechanism, and the image forming device to print in a single color on the recording medium as the first printing, print in a color other than the single color at a first density as the second printing after the first printing, and print in the color of the second printing at a second density higher than the first density as third printing after the second printing.

According to a tenth aspect, an image forming system for printing multiple times on the same side of a recording medium with a common image forming device includes a first conveyance mechanism, a second conveyance mechanism, and a control unit. The first conveyance mechanism conveys the recording medium to the image forming device. The second conveyance mechanism conveys the recording medium having passed through the image forming device to the image forming device again. The control unit controls multiple times of printing operations of the image forming device. The control unit controls the operations of the first conveyance mechanism, the second conveyance mechanism, and the image forming device to cause the image forming device to perform first printing on the recording medium based on first print data and perform second printing on the recording medium subjected to the first printing based on second print data different from the first print data.

According to an eleventh aspect, an image forming method for printing multiple times on the same side of a recording medium with a common image forming device includes first conveying, second conveying, and controlling. The first conveying includes conveying the recording medium to the image forming device. The second conveying includes conveying the recording medium having passed through the image forming device to the image forming device again. The controlling includes controlling multiple times of printing operations of the image forming device. The controlling includes causing the image forming device to perform first printing on the recording medium based on first print data and perform second printing on the recording medium subjected to the first printing based on second print data different from the first print data.

According to a twelfth aspect, a carrier medium carries computer-readable code for controlling a computer system to carry out a method for printing multiple times on the same side of a recording medium with a common image forming device. The method includes first conveying, second conveying, and controlling. The first conveying includes conveying the recording medium to the image forming device. The second conveying includes conveying the recording medium having passed through the image forming device to the image forming device again. The controlling includes controlling multiple times of printing operations of the image forming device. The controlling includes causing the image forming device to perform first printing on the recording medium based on first print data and perform second printing on the recording medium subjected to the first printing based on second print data different from the first print data.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An image forming apparatus (100), comprising:
an image forming device (30) configured to form an image on a recording medium;
a first conveyance mechanism (20) configured to convey the recording medium to the image forming device (30);
a second conveyance mechanism (50) configured to convey the recording medium having passed through the image forming device (30) to the image forming device (30) again; and
a control unit (210) configured to control multiple times of printing operations of the image forming device (30),
wherein the image forming device (30) is configured to perform multiple times of printing on a same side of the recording medium, the multiple times of printing include first printing and second printing, the first printing is printing on the recording medium based on first print data, and the second printing is printing on the recording medium subjected to the first printing based on second print data different from the first print data.

2. The image forming apparatus (100) according to claim 1,
wherein the second conveyance mechanism (50) is configured to convey the recording medium subjected to the first printing to the image forming device (30) without reversing a direction of conveyance of the recording medium.

3. The image forming apparatus (100) according to claim 1 or 2, further comprising a medium detector configured to detect a color of the recording medium before printing,
wherein the control unit (210) is configured to:
set a number of times of printing on the recording medium based on the color of the recording medium detected by the medium detector (60); and
control operations of the first conveyance mechanism (20), the second conveyance mechanism (50), and the image forming device (30) to perform the set number of times of printing on the recording medium.

4. The image forming apparatus (100) according to any one of claims 1 to 3, further comprising a printed-side detector (60) configured to detect a condition of a printed side of the recording medium subjected to the first printing,
wherein the control unit (210) is configured to change a number of times of printing on the recording medium based on the condition of the printed side detected by the printed-side detector (60).

5. The image forming apparatus (100) according to any one of claims 1 to 4, further comprising a medium detector (60) configured to detect a color of the recording medium before printing,
wherein the control unit (210) is configured to:
set a color and a density of print data to be printed on the recording medium based on the color of the recording medium detected by the medium detector (60); and
control an operation of the image forming device (30) to print on the recording medium according to the set color and density of the print data.

6. The image forming apparatus (100) according to any one of claims 1 to 5, further comprising a printed-side detector (60) configured to detect a condition of a printed side of the recording medium subjected to the first printing,
wherein the control unit (210) is configured to change a color and a density of print data to be printed on the recording medium based on the condition of the printed side detected by the printed-side detector (60).

7. The image forming apparatus (100) according to any one of claims 1 to 6, further comprising a fixing device (33),
wherein the image forming device (30) is configured to form a toner image on the recording medium in each of the first printing and the second printing, and the fixing device (33) is configured to heat the recording medium bearing the toner image formed by the image forming device (30) to fix the toner image on the recording medium, and
wherein the control unit (210) is configured to:
cause the fixing device (33) to heat a recording medium without toner; and
cause the image forming device (33) to form the toner image on the recording medium heated by the fixing device (33).

8. The image forming apparatus (100) according to any one of claims 1 to 7,
wherein the second conveyance mechanism (50) includes a standby mechanism (56) configured to temporarily stop the recording medium subjected to the first printing and cause the recording medium to stand by, and the control unit (210) is configured to cause the image forming device (30) to perform the second printing on the recording medium conveyed to the image forming device (30) after controlling an operation of the standby mechanism (56) to stop the recording medium subjected to the first printing.

9. The image forming apparatus (100) according to any one of claims 1 to 8,
wherein the image forming device (30) is configured to perform multicolor printing, and the control unit (210) is configured to control operations of the first conveyance mechanism (20), the second conveyance mechanism (50), and the image forming device (30) to print in a single color on the recording medium as the first printing, print in a color other than the single color at a first density as the second printing after the first printing, and print in the color of the second printing at a second density higher than the first density as third printing after the second printing.

10. An image forming system (1000) for printing multiple times on a same side of a recording medium with an image forming device, the system comprising:
a first conveyance mechanism (20) configured to convey the recording medium to the image forming device (30);
a second conveyance mechanism (50) configured to convey the recording medium having passed through the image forming device (30) to the image forming device (30) again; and
a control unit (210) configured to control multiple times of printing operations of the image forming device (30),
wherein the control unit (210) is configured to control operations of the first conveyance mechanism (20), the second conveyance mechanism (50), and the image forming device (30) to cause the image forming device (30) to perform first printing on the recording medium based on first print data and perform second printing on the recording medium subjected to the first printing based on second print data different from the first print data.

11. An image forming method for printing multiple times on a same side of a recording medium with an image forming device, the method comprising:
first conveying the recording medium to the image forming device;
second conveying the recording medium having passed through the image forming device to the image forming device again; and
controlling multiple times of printing operations of the image forming device,
the controlling including causing the image forming device to perform first printing on the recording medium based on first print data and perform second printing on the recording medium subjected to the first printing based on second print data different from the first print data.

12. A carrier medium carries computer-readable code for controlling a computer system to carry out a method for printing multiple times on a same side of a recording medium with an image forming device, the method comprising:
first conveying the recording medium to the image forming device;
second conveying the recording medium having passed through the image forming device to the image forming device again; and
controlling multiple times of printing operations of the image forming device,
the controlling including causing the image forming device to perform first printing on the recording medium based on first print data and perform second printing on the recording medium subjected to the first printing based on second print data different from the first print data.
